# DEMANDE DE BREVET EUROPEEN

(11) **EP 4 265 902 A1**
(43) Date de publication de la demande: **25.10.2023**
(21) Numéro de dépôt: 23167555.4
(22) Date de dépôt: 12.04.2023
(51) Int. Cl.: F02K 1/72

(54) **DÉFLECTEUR POURVU DE FACES À COURBATURES DIFFÉRENTES POUR UN INVERSEUR DE POUSSÉE D'UNE NACELLE DE MOTEUR D AÉRONEF**

(30) Priorité: 21.04.2022 FR 2203682
(71) Demandeur: Airbus Operations SAS, 31060 Toulouse (FR)
(72) Inventeur: DAVIS, Lauren, 31060 TOULOUSE (FR); BOURDEAU, Christophe, 31060 TOULOUSE (FR); CHELIN, Frédéric, 31060 TOULOUSE (FR)
(74) Mandataire: Gevers & Orès

(57) **Abrégé**

- Déflecteur pourvu de faces à courbures différentes pour un inverseur de poussée d'une nacelle de moteur d'aéronef.
- Le déflecteur (1A), par exemple un déflecteur latéral ou un déflecteur orbital, destiné à une structure d'éjection d'un inverseur de poussée, comprend une plaque déflectrice (8A) destinée à agir sur un écoulement aérodynamique, ladite plaque déflectrice (8A) présentant une face amont (F1A) concave et une face aval (F2A) convexe ainsi qu'une extrémité dite d'entrée (E1A) et une extrémité dite de sortie (E2A), la face amont (F1A) et la face aval (F2A) de la plaque déflectrice (8A) ayant des profils courbes différents, le déflecteur (1A) présentant un profil particulier lui procurant des propriétés permettant d'agir efficacement sur l'écoulement aérodynamique de manière à augmenter la performance de l'inverseur de poussée dans lequel il est monté.

## Description

### Domaine technique

La présente invention concerne un déflecteur pourvu de faces à courbures différentes pour un inverseur de poussée d'une nacelle d'un moteur d'aéronef, ainsi qu'un inverseur de poussée comprenant au moins un tel déflecteur.

### Etat de la technique

On sait que les moteurs d'un aéronef, par exemple d'un avion de transport, sont pourvus d'un inverseur de poussée dont la fonction est de freiner l'aéronef lors d'un atterrissage, en produisant un effort de contre-poussée. L'inverseur de poussée est intégré dans la nacelle entourant le moteur, par exemple un turboréacteur à double flux.

De façon usuelle, un inverseur de poussée à grille comporte généralement un capot mobile, alternativement, entre une position déployée dans laquelle il ouvre un passage dans la nacelle et découvre des grilles d'éjection et de déviation de flux, et une position fermée dans laquelle il ferme ce passage.

Lors du déploiement de l'inverseur de poussée et du déplacement du capot dans sa position déployée, des portes viennent obturer la veine d'air du moteur afin de dévier une partie du flux vers les grilles d'éjection et ensuite vers l'extérieur de la nacelle au travers desdites grilles d'éjection, ce qui génère un effort aérodynamique de contre-poussée.

Les grilles d'éjection sont, généralement, formées de cascades comprenant un nombre élevé de déflecteurs.

Un objectif est d'avoir une meilleure gestion des flux et d'améliorer les performances de ce genre d'inverseur de poussée.

### Exposé de l'invention

La présente invention concerne un déflecteur pour un inverseur de poussée d'une nacelle d'un moteur d'aéronef, permettant d'atteindre cet objectif, ledit déflecteur comprenant une plaque déflectrice destinée à agir sur un écoulement aérodynamique, ladite plaque déflectrice présentant une face concave dite face amont et une face convexe dite face aval ainsi qu'une extrémité dite d'entrée et une extrémité dite de sortie.

Selon l'invention, la face amont et la face aval de la plaque déflectrice présentent des profils courbes différents.

Ainsi, grâce aux profils courbes différents sur les faces amont et aval, on peut prévoir sur ces faces amont et aval des profils particuliers permettant de conférer au déflecteur (présentant une forme géométrique générale sensiblement de lunule en section transversale) des propriétés particulières pour agir sur l'écoulement aérodynamique, afin notamment d'aider à augmenter la performance d'un inverseur de poussée lorsqu'il est intégré dans ce dernier, comme précisé ci-dessous.

Dans le cadre de la présente invention, ledit déflecteur peut être :
- un déflecteur orbital ; ou
- un déflecteur latéral.

Avantageusement, la face amont et la face aval de la plaque déflectrice comprennent, chacune, au moins une zone intermédiaire courbe, les courbures des deux zones intermédiaires étant différentes.

De plus, de façon avantageuse, la face amont et la face aval de la plaque déflectrice comprennent, chacune, à l'extrémité d'entrée un tronçon rectiligne présentant un angle dit d'entrée. Les deux angles d'entrée présentent, par exemple, des valeurs différentes.

En outre, avantageusement, la face amont et la face aval de la plaque déflectrice comprennent, chacune, à l'extrémité de sortie un tronçon rectiligne présentant un angle dit de sortie. Les deux angles de sortie présentent, par exemple, des valeurs différentes.

Par conséquent, aussi bien sur la face amont que sur la face aval du déflecteur, on peut agir sur les différentes zones existantes (zone intermédiaire courbe et tronçons rectilignes sur les extrémités d'entrée et de sortie) pour modifier le profil correspondant du déflecteur afin de lui conférer les propriétés recherchées pour agir sur l'écoulement aérodynamique.

Dans un mode de réalisation préféré, la plaque déflectrice est pourvue, dans son corps, d'un espace interne fermé creux.

En outre, dans un mode de réalisation particulier, la plaque déflectrice comprend au moins l'une des valeurs d'angle suivantes :
- pour la face amont, à l'extrémité d'entrée, un angle d'entrée compris entre 5° et 70° ;
- pour la face aval, à l'extrémité d'entrée, un angle d'entrée compris entre 5° et 70° ;
- pour la face amont, à l'extrémité de sortie, un angle de sortie compris entre 10° et 60° ;
- pour la face aval, à l'extrémité de sortie, un angle de sortie compris entre 10° et 60°.

Par ailleurs, dans un premier mode de réalisation, à l'extrémité de sortie, la face amont et la face aval de la plaque déflectrice se rejoignent le long d'une ligne de jonction.

En outre, dans un second mode de réalisation, à l'extrémité de sortie, la face amont et la face aval de la plaque déflectrice rejoignent de part et d'autre une surface d'extrémité. De préférence, cette surface d'extrémité est plane.

La présente invention concerne également un inverseur de poussée pour une nacelle d'un moteur d'aéronef. Selon l'invention, ledit inverseur de poussée comporte au moins un déflecteur tel que celui décrit ci-dessus.

Avantageusement, le ou les déflecteurs sont agencés pour créer des voies d'éjection présentant des largeurs variables.

En outre, dans un mode de réalisation particulier, l'inverseur de poussée comporte une pluralité de déflecteurs présentant des caractéristiques, par exemple des hauteurs, variables en fonction de leur emplacement.

Par ailleurs, avantageusement, l'inverseur de poussée comporte une pluralité de déflecteurs dont au moins deux sont décalés radialement l'un par rapport à l'autre.

La présente invention concerne également une nacelle pour un moteur d'un aéronef, en particulier d'un avion de transport civil, qui comporte au moins un inverseur de poussée tel que celui décrit ci-dessus.

### Brève description des figures

Les figures annexées feront bien comprendre comment l'invention peut être réalisée. Sur ces figures, des références identiques désignent des éléments semblables.
La figure 1 est une vue schématique en coupe d'une nacelle de moteur d'aéronef, pourvue d'un inverseur de poussée comprenant des déflecteurs selon un mode de réalisation particulier de l'invention.
La figure 2 est une vue en perspective d'une partie d'une structure d'éjection pourvue de déflecteurs latéraux et orbitaux.
La figure 3 illustre schématiquement un déflecteur selon un premier mode de réalisation de l'invention.
La figure 4 est une vue similaire à celle de la figure 3 sur laquelle ont été mis en évidence différents paramètres du déflecteur.
La figure 5 illustre schématiquement un déflecteur selon un second mode de réalisation de l'invention.
La figure 6 est une vue similaire à celle de la figure 5 sur laquelle ont été mis en évidence différents paramètres du déflecteur.
La figure 7 est une vue schématique, en coupe longitudinale, d'une partie de nacelle, au niveau d'une structure d'éjection, selon un premier mode de réalisation.
La figure 8 est une vue schématique, en coupe longitudinale, d'une partie de nacelle, au niveau d'une structure d'éjection, selon un deuxième mode de réalisation.
La figure 9 est une vue schématique, en coupe longitudinale, d'une partie de nacelle, au niveau d'une structure d'éjection, selon un troisième mode de réalisation.
La figure 10 est une vue schématique, en coupe longitudinale, d'une partie de nacelle, au niveau d'une structure d'éjection, selon un quatrième mode de réalisation.
La figure 11 est une vue schématique, en coupe longitudinale, d'une partie de nacelle, au niveau d'une structure d'éjection, selon un cinquième mode de réalisation.
La figure 12 est une vue schématique, en coupe longitudinale, d'une partie de nacelle, au niveau d'une structure d'éjection, selon un sixième mode de réalisation.
La figure 13 est une vue schématique, en coupe longitudinale, d'une partie de nacelle, au niveau d'une structure d'éjection, selon un septième mode de réalisation.

### Description détaillée

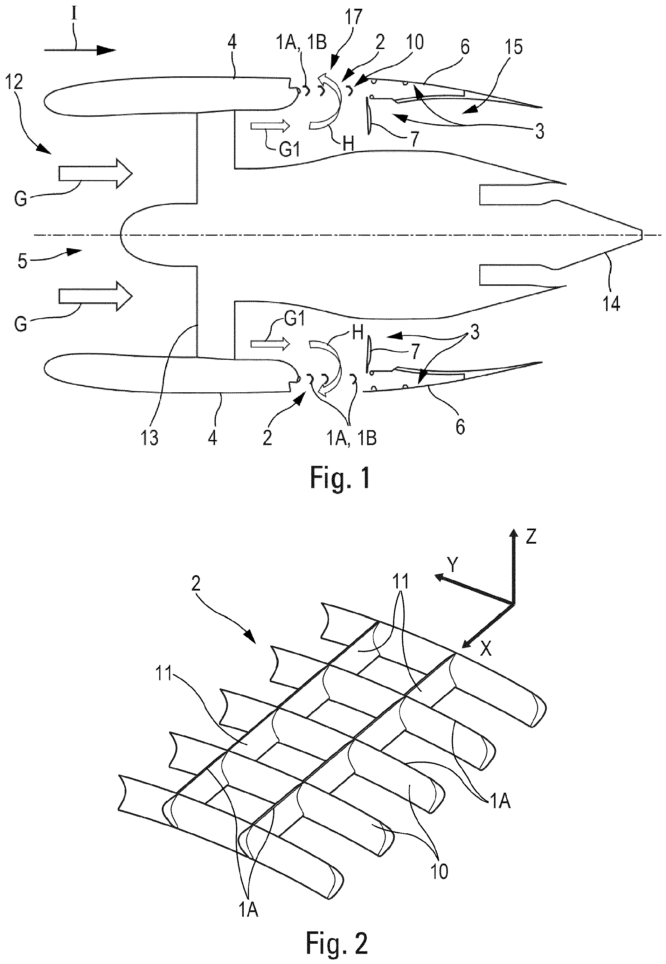

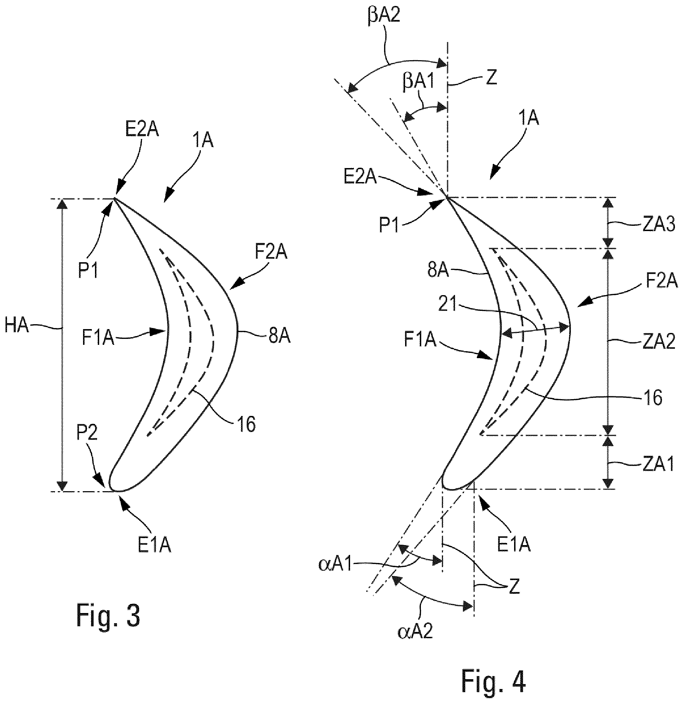

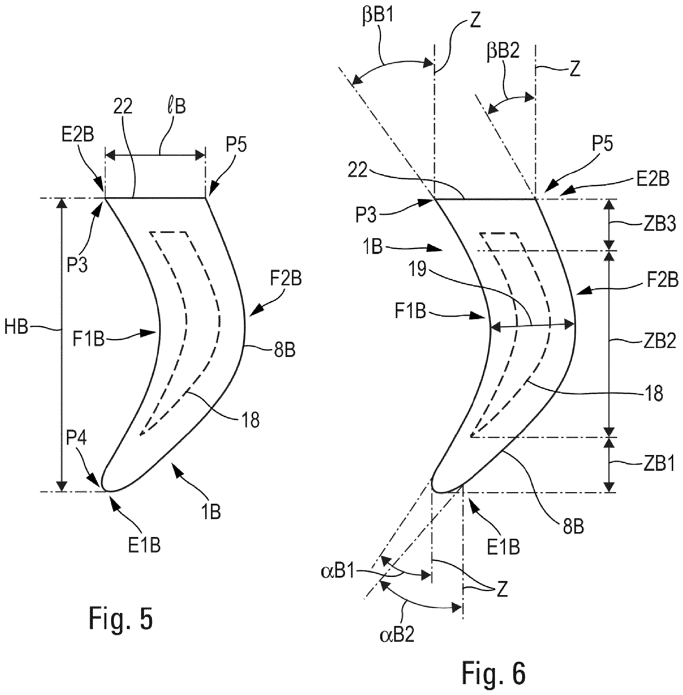

Le déflecteur représenté schématiquement dans un premier mode de réalisation 1A sur les figures 3 et 4 et dans un second mode de réalisation 1B sur les figures 5 et 6 est destiné à être monté dans une structure d'éjection 2 (et de déviation de flux), représentée partiellement dans un exemple particulier sur la figure 2. Cette structure d'éjection 2 fait partie d'un inverseur de poussée 3, comme représenté sur la figure 1. L'inverseur de poussée 3 équipe une nacelle 4 d'un moteur 5, par exemple un turboréacteur double flux, d'un aéronef (non représenté).

De façon usuelle, un turboréacteur double flux est apte à générer par l'intermédiaire d'une soufflante 13 un flux d'air chaud issu de la chambre de combustion du turboréacteur et un flux d'air froid qui circule à l'extérieur du turboréacteur à travers un canal 15 annulaire formé entre un carénage du turboréacteur et une paroi interne de la nacelle 4. Les deux flux d'air sont éjectés du turboréacteur par l'arrière de la nacelle 4.

Dans l'exemple de la figure 1, le moteur 5, en l'occurrence un turboréacteur double flux, est entouré, de façon usuelle, de la nacelle 4. La nacelle 4 présente une structure tubulaire comprenant successivement dans le sens d'une flèche I (de l'avant vers l'arrière) sur la figure 1, une entrée d'air 12 à travers laquelle pénètre un flux d'air comme illustré par des flèches G, une section destinée à entourer la soufflante 13 du turboréacteur, et une section abritant l'inverseur de poussée 3 et destinée à entourer la chambre de combustion du turboréacteur, et elle est terminée par une tuyère d'éjection 14.

L'inverseur de poussée 3 a pour fonction d'améliorer, lors de l'atterrissage de l'aéronef équipé de la nacelle 4 et du moteur 5, la capacité de freinage en redirigeant vers l'avant (en sens opposé à celui de la flèche I) au moins une partie de la poussée engendrée par le moteur 5.

Pour ce faire, la nacelle 4 comporte, un capot mobile 6, par exemple, coulissant, qui est configuré de manière à ce qu'en reculant (dans le sens de la flèche I) lors d'une phase d'ouverture, il découvre la ou les structures d'éjection 2 disposées dans l'épaisseur de la nacelle 4 dans une zone dite d'éjection 17. Un système mécanique relie ce capot mobile 6 à des panneaux de blocage (ou portes) 7 qui se déploient à l'intérieur du canal 15 et bloquent la sortie du flux G1 (correspondant à la partie du flux G circulant dans le canal 15) en flux direct par l'arrière. Le flux est donc dévié et éjecté à travers la structure d'éjection 2, comme illustré par des flèches H sur la figure 1, créant ainsi l'inversion de poussée.

Sur la figure 2, on a représenté, à titre d'exemple, une partie d'une structure d'éjection 2. Cette structure d'éjection 2 comporte une pluralité de déflecteurs 10 et 11, à savoir :
- des déflecteurs orbitaux 10, à savoir des déflecteurs qui sont agencés suivant une direction (illustrée par une flèche Y) normale à celle de l'axe moteur (illustrée par une flèche X) du moteur 5 et ont comme fonction usuelle de dévier le flux d'air pour générer l'inversion de poussée ; et
- des déflecteurs latéraux 11, à savoir des déflecteurs qui sont agencés suivant la direction de l'axe moteur illustrée par la flèche X et qui agissent sur le flux sortant de l'inverseur de poussée pour éviter qu'il n'atteigne certaines zones, comme précisé ci-dessous.

Dans le cadre de la présente invention, le déflecteur représenté schématiquement dans un premier mode de réalisation 1A sur les figures 3 et 4 et dans un second mode de réalisation 1B sur les figures 5 et 6 peut correspondre à un déflecteur orbital 10 ou à un déflecteur latéral 11, comme précisé ci-après.

Quel que soit le mode de réalisation considéré, le déflecteur 1A, 1B comprend une plaque déflectrice 8A, 8B. La plaque déflectrice 8A, 8B et le déflecteur 1A, 1B peuvent être réalisés selon différents modes de réalisation, comme précisé ci-dessous.

La plaque déflectrice 8A, 8B présente une face dite face amont F1A, F1B qui est concave et une face dite aval F2A, F2B qui est convexe. La face amont F1A, F1B est située vers l'amont et la face aval F2A, F2B est située vers l'aval, par rapport au sens d'écoulement du flux G1.

La plaque déflectrice 8A, 8B présente également une extrémité dite d'entrée E1A, E1B par laquelle le flux H arrive sur la plaque déflectrice 8A, 8B et une extrémité dite de sortie E2A, E2B au niveau de laquelle le flux H quitte le déflecteur 1A, 1B et sort de la structure d'éjection 2.

Selon l'invention, quel que soit le mode de réalisation considéré, la plaque déflectrice 8A, 8B du déflecteur 1A, 1B présente une forme géométrique générale sensiblement de lunule (en section transversale), telle que précisé ci-dessous, pour laquelle la face amont F1A, F1B (face concave) et la face aval F2A, F2B (face convexe) de la plaque déflectrice 8A, 8B présentent des profils courbes différents, comme décrit ci-après en référence aux deux modes de réalisation 1A et 1B.

Dans le premier mode de réalisation, représenté sur les figures 3 et 4, qui est relatif au déflecteur 1A, la plaque déflectrice 8A présente, entre l'extrémité d'entrée E1A et l'extrémité de sortie E2A, trois zones successives, comme représenté sur la figure 4 :
- une zone d'entrée ZA1 correspondant à un tronçon rectiligne, en section transversale, à la fois sur la face amont F1A et sur la face aval F2A ;
- une zone intermédiaire ZA2 correspondant, en section transversale, à un tronçon courbe à la fois sur la face amont F1A et sur la face aval F2A, les tronçons courbes présentant des courbures différentes entre la face amont F1A et la face aval F2A ; et
- une zone de sortie ZA3 correspondant à un tronçon rectiligne, en section transversale, à la fois sur la face amont F1A et sur la face aval F2A.

Le tronçon courbe de la zone intermédiaire ZA2 peut présenter une courbure variable, aussi bien sur la face amont F1A que sur la face aval F2A. Ces courbures sont adaptées et optimisées pour obtenir un déflecteur 1A répondant au mieux aux objectifs recherchés, à savoir principalement son effet sur l'écoulement. En modifiant les courbures, on est donc en mesure de modifier le profil de chacune des faces amont et aval et ainsi le profil global du déflecteur 1A, le profil global du déflecteur 1A étant un paramètre important pour adapter l'effet du déflecteur 1A sur l'écoulement.

Dans le mode de réalisation représenté sur les figures 3 et 4, le profil de la face amont F1A du déflecteur 1A est formé du tronçon rectiligne de la zone d'entrée ZA1, du tronçon courbe de la zone intermédiaire ZA2 et du tronçon rectiligne de la zone de sortie ZA3. Par conséquent, pour modifier le profil de la face amont F1A du déflecteur 1A, on modifie les caractéristiques de l'une ou plusieurs de ces zones ZA1, ZA2 et ZA3 sur la face amont F1A.

De même, le profil de la face aval F2A du déflecteur 1A est formé du tronçon rectiligne de la zone d'entrée ZA1, du tronçon courbe de la zone intermédiaire ZA2 et du tronçon rectiligne de la zone de sortie ZA3. Par conséquent, pour modifier le profil de la face aval F2A du déflecteur 1A, on modifie les caractéristiques de l'une ou plusieurs de ces zones ZA1, ZA2 et ZA3 sur la face aval F2A.

Par ailleurs, comme représenté sur les figures 3 et 4, à l'extrémité de sortie E2A, le tracé rectiligne de la face amont F1A et le tracé rectiligne de la face aval F2A de la plaque déflectrice 8A se rejoignent le long d'une ligne de jonction, illustrée par le point P1 en section transversale.

En outre, à l'extrémité d'entrée E1A, la face amont F1A et la face aval F2A de la plaque déflectrice 8A se rejoignent le long d'une ligne de jonction, illustrée par le point P2 en section transversale. L'extrémité d'entrée E1A présente une forme arrondie.

La plaque déflectrice 8A présente, à l'extrémité d'entrée E1A, sur la face amont F1A, un angle d'entrée αA1 (figure 4) compris entre 5° et 70°. Cet angle d'entrée αA1 correspond à l'angle entre le tronçon rectiligne de la zone d'entrée ZA1 sur la face amont F1A et une direction verticale (correspondant à la direction Z de la figure 2). La direction verticale Z passant sensiblement entre le point P2 de l'extrémité d'entrée E1A le plus en amont et le point P1 de l'extrémité de sortie E2A le plus en amont de la plaque déflectrice 8A.

De plus, la plaque déflectrice 8A présente également, à l'extrémité d'entrée E1A, sur la face aval F2A, un angle d'entrée αA2 (figure 4) compris entre 5° et 70°. Cet angle d'entrée αA2 correspond à l'angle entre le tronçon rectiligne de la zone d'entrée ZA1 sur la face aval F2A et la direction verticale Z.

Les deux angles d'entrée αA1 et αA2 présentent des valeurs différentes.

Dans un mode de réalisation particulier, les deux angles d'entrée αA1 et αA2 peuvent également présenter des valeurs identiques (en raison de la forme arrondie de l'extrémité d'entrée E1A).

En outre, la plaque déflectrice 8A présente à l'extrémité de sortie E2A, sur la face amont F1A, un angle de sortie βA1 (figure 4) compris entre 10° et 60°. Cet angle de sortie βA1 correspond à l'angle entre le tronçon rectiligne de la zone de sortie ZA3 sur la face amont F1A et la direction verticale Z.

De plus, la plaque déflectrice 8A présente à l'extrémité de sortie E2A, sur la face aval F2A, un angle de sortie βA2 (figure 4) compris entre 10° et 60°. Cet angle de sortie βA2 correspond à l'angle entre le tronçon rectiligne de la zone de sortie ZA3 sur la face aval F2A et la direction verticale Z.

Les deux angles de sortie βA1 et βA2 présentent des valeurs différentes.

Les angles d'entrée αA1 et αA2 et les angles de sortie βA1 et βA2 peuvent présenter des valeurs supérieures à celles des déflecteurs usuels des grilles d'éjection usuelles à cascades, ce qui permet d'augmenter l'effet angulaire de contre-poussée.

Dans une variante de réalisation :
- la zone d'entrée ZA1 de la plaque déflectrice 8A peut correspondre à un tronçon courbe, en section transversale, et ceci sur la face amont F1A et/ou sur la face aval F2A ; et/ou
- la zone de sortie ZA3 de la plaque déflectrice 8A peut correspondre à un tronçon courbe, en section transversale, et ceci sur la face amont F1A et/ou sur la face aval F2A.

De préférence, l'épaisseur maximale 21 (figure 4) de la plaque déflectrice 8A est inférieure à 40 % de la hauteur HA (figure 3) de ladite plaque déflectrice 8A. La hauteur HA correspond à la longueur selon la direction verticale Z de la plaque déflectrice 8A, à savoir sensiblement à la longueur entre le point P2 de l'extrémité d'entrée E1A le plus en amont et le point P1 de l'extrémité de sortie E2A le plus en amont de la plaque déflectrice 8A.

Les angles d'entrée αA1 et αA2, les angles de sortie βA1 et βA2 ainsi que les courbures et les longueurs de la zone intermédiaire ZA2, à la fois sur la face amont F1A et sur la face aval F2A sont des paramètres variables en fonction des modes de réalisation envisagés et leurs valeurs sont choisies notamment pour optimiser la performance. Ainsi, en adaptant ces paramètres, on est en mesure d'optimiser le profil de chacune des faces amont et aval et ainsi d'optimiser le profil global du déflecteur 1A, pour obtenir les effets recherchés sur l'écoulement.

Dans un mode de réalisation préféré, la plaque déflectrice 8A est pourvue, dans son corps, d'un espace interne 16 représenté en tirets sur les figures 3 et 4. Cet espace interne 16 est fermé et creux. En section transversale, l'espace interne 16 peut, par exemple, présenter une forme (de taille réduite) qui est similaire à celle du contour externe de la plaque déflectrice 8A. Ce mode de réalisation préféré permet de réduire la masse du déflecteur 1A.

En outre, dans le second mode de réalisation, représenté sur les figures 5 et 6, qui est relatif au déflecteur 1B, la plaque déflectrice 8B présente, entre l'extrémité d'entrée E1B et l'extrémité de sortie E2B, trois zones successives, comme représenté sur la figure 6 :
- une zone d'entrée ZB1 correspondant à un tronçon rectiligne, en section transversale, à la fois sur la face amont F1B et sur la face aval F2B ;
- une zone intermédiaire ZB2 correspondant, en section transversale, à un tronçon courbe à la fois sur la face amont F1B et sur la face aval F2B, les tronçons courbes présentant des courbures différentes entre la face amont F1B et la face aval F2B ; et
- une zone de sortie ZB3 correspondant à un tronçon rectiligne, en section transversale, à la fois sur la face amont F1B et sur la face aval F2B.

Le tronçon courbe de la zone intermédiaire ZB2 peut présenter une courbure variable, aussi bien sur la face amont F1B que sur la face aval F2B. Ces courbures sont adaptées et optimisées pour obtenir un déflecteur 1B répondant au mieux aux objectifs recherchés, à savoir principalement son effet sur l'écoulement. En modifiant les courbures, on est donc en mesure de modifier le profil de chacune des faces amont et aval et ainsi le profil global du déflecteur 1B, le profil global du déflecteur 1B étant un paramètre important pour adapter l'effet du déflecteur 1B sur l'écoulement.

Dans le mode de réalisation représenté sur les figures 5 et 6, le profil de la face amont F1B du déflecteur 1B est formé du tronçon rectiligne de la zone d'entrée ZB1, du tronçon courbe de la zone intermédiaire ZB2 et du tronçon rectiligne de la zone de sortie ZB3. Par conséquent, pour modifier le profil de la face amont F1B du déflecteur 1B, on modifie les caractéristiques de l'une ou plusieurs de ces zones ZB1, ZB2 et ZB3 sur la face amont F1B.

De même, le profil de la face aval F2B du déflecteur 1B est formé du tronçon rectiligne de la zone d'entrée ZB1, du tronçon courbe de la zone intermédiaire ZB2 et du tronçon rectiligne de la zone de sortie ZB3. Par conséquent, pour modifier le profil de la face aval F2B du déflecteur 1B, on modifie les caractéristiques de l'une ou plusieurs de ces zones ZB1, ZB2 et ZB3 sur la face aval F2B.

Par ailleurs, comme représenté sur les figures 5 et 6, à l'extrémité de sortie E2B, la face amont F1B et la face aval F2B de la plaque déflectrice 8B rejoignent de part et d'autre une surface d'extrémité 22, à des lignes de liaison illustrées respectivement par les points P3 et P5 en section transversale.

De préférence, cette surface d'extrémité 22 située à l'extrémité de sortie E2B du déflecteur 1B est plane.

En outre, à l'extrémité d'entrée E1B, la face amont F1B et la face aval F2B de la plaque déflectrice 8B se rejoignent le long d'une ligne de jonction, illustrée par le point P4 en section transversale. L'extrémité d'entrée E1B présente une forme arrondie.

La plaque déflectrice 8B présente, à l'extrémité d'entrée E1B, sur la face amont F1B, un angle d'entrée αB1 (figure 6) compris entre 5° et 70°. Cet angle d'entrée αB1 correspond à l'angle entre le tronçon rectiligne de la zone d'entrée ZB1 sur la face amont F1B et une direction verticale (correspondant à la direction Z de la figure 2). La direction verticale Z passant sensiblement entre le point P4 de l'extrémité d'entrée E1B le plus en amont et le point P3 de l'extrémité de sortie E2B le plus en amont de la plaque déflectrice 8B.

De plus, la plaque déflectrice 8B présente également, à l'extrémité d'entrée E1B, sur la face aval F2B, un angle d'entrée αB2 (figure 6) compris entre 5° et 70°. Cet angle d'entrée αB2 correspond à l'angle entre le tronçon rectiligne de la zone d'entrée ZB1 sur la face aval F2B et la direction verticale Z.

Les deux angles d'entrée αB1 et αB2 présentent des valeurs différentes.

Dans un mode de réalisation particulier, les deux angles d'entrée αB1 et αB2 peuvent également présenter des valeurs identiques (en raison de la forme arrondie de l'extrémité d'entrée E1B).

En outre, la plaque déflectrice 8B présente à l'extrémité de sortie E2B, sur la face amont F1B, un angle de sortie βB1 (figure 6) compris entre 10° et 60°. Cet angle de sortie βB1 correspond à l'angle entre le tronçon rectiligne de la zone de sortie ZB3 sur la face amont F1B et la direction verticale Z.

De plus, la plaque déflectrice 8B présente à l'extrémité de sortie E2B, sur la face aval F2B, un angle de sortie βB2 (figure 6) compris entre 10° et 60°. Cet angle de sortie βB2 correspond à l'angle entre le tronçon rectiligne de la zone de sortie ZB3 sur la face aval F2B et la direction verticale Z.

Les deux angles de sortie βB1 et βB2 présentent des valeurs différentes.

Dans un mode de réalisation particulier, les deux angles de sortie βB1 et βB2 peuvent également présenter des valeurs identiques.

Les angles d'entrée αB1 et αB2 et les angles de sortie βB1 et βB2 peuvent présenter des valeurs supérieures à celles des déflecteurs usuels des grilles d'éjection usuelles à cascades, ce qui permet d'augmenter l'effet angulaire de contre-poussée.

Dans une variante de réalisation :
- la zone d'entrée ZB1 de la plaque déflectrice 8B peut correspondre à un tronçon courbe, en section transversale, et ceci sur la face amont F1B et/ou sur la face aval F2B ; et/ou
- la zone de sortie ZB3 de la plaque déflectrice 8B peut correspondre à un tronçon courbe, en section transversale, et ceci sur la face amont F1B et/ou sur la face aval F2B.

De préférence, l'épaisseur maximale 19 (figure 6) de la plaque déflectrice 8B est inférieure à 40 % de la hauteur HB (figure 5) de la plaque déflectrice 8B. La hauteur HB correspond à la longueur selon l'axe vertical Z de la plaque déflectrice 8A, à savoir sensiblement à la longueur entre le point P4 de l'extrémité d'entrée E1B le plus en amont et le point P3 de l'extrémité de sortie E2B le plus en amont de la plaque déflectrice 8B.

Les angles d'entrée αB1 et αB2, les angles de sortie βB1 et βB2 ainsi que les courbures et les longueurs de la zone intermédiaire ZB2, à la fois sur la face amont F1B et sur la face aval F2B, sont des paramètres variables en fonction des modes de réalisation envisagés et leurs valeurs sont choisies notamment pour optimiser la performance. Ainsi, en adaptant ces paramètres, on est en mesure d'optimiser le profil de chacune des faces amont et aval et ainsi d'optimiser le profil global du déflecteur 1B, pour obtenir les effets recherchés sur l'écoulement.

Dans un mode de réalisation préféré, la plaque déflectrice 8B est pourvue, dans son corps, d'un espace interne 18 représenté en tirets sur les figures 5 et 6. Cet espace interne 18 est fermé et creux. En section transversale, l'espace interne 18 peut, par exemple, présenter une forme (de taille réduite) qui est similaire à celle du contour externe de la plaque déflectrice 8B. Ce mode de réalisation préféré permet de réduire la masse du déflecteur 1B.

Dans le cadre de la présente invention, les déflecteurs 1A, 1B, tels que décrits ci-dessus, peuvent être utilisés comme déflecteurs orbitaux 10 et/ou comme déflecteurs latéraux 11 (figure 2). Par conséquent en fonction de l'application envisagée, la structure d'éjection 2 peut comporter :
- des déflecteurs 1A, 1B uniquement comme déflecteurs orbitaux 10, les déflecteurs latéraux correspondant dans ce cas à des déflecteurs usuels ;
- des déflecteurs 1A, 1B uniquement comme déflecteurs latéraux 11, les déflecteurs orbitaux correspondant dans ce cas à des déflecteurs usuels ; ou
- des déflecteurs 1A, 1B à la fois comme déflecteurs orbitaux 10 et comme déflecteurs latéraux 11.

On présente, ci-après, plusieurs modes de réalisation de structures d'éjection 2 comportant un ou plusieurs déflecteurs 1A, 1B, au moins comme déflecteurs orbitaux 10. Les déflecteurs orbitaux 10 peuvent être agencés de différentes manières dans la structure d'éjection 2.

Les différentes caractéristiques des déflecteurs orbitaux 10 utilisés dans la structure d'éjection 2, en particulier leur nombre, leur mode de réalisation, leur taille et leur agencement, dépendent des propriétés et caractéristiques envisagées pour la structure d'éjection 2 et donc pour l'inverseur de poussée 3, comme précisé ci-dessous en référence à différents exemples de réalisation.

Le nombre de déflecteurs orbitaux 10 de la structure d'éjection 2, par exemple entre 1 et 6 déflecteurs orbitaux 10, est très réduit par rapport au nombre de déflecteurs orbitaux usuels des grilles d'éjection usuelles à cascades, ce qui permet notamment de réduire l'encombrement et la masse.

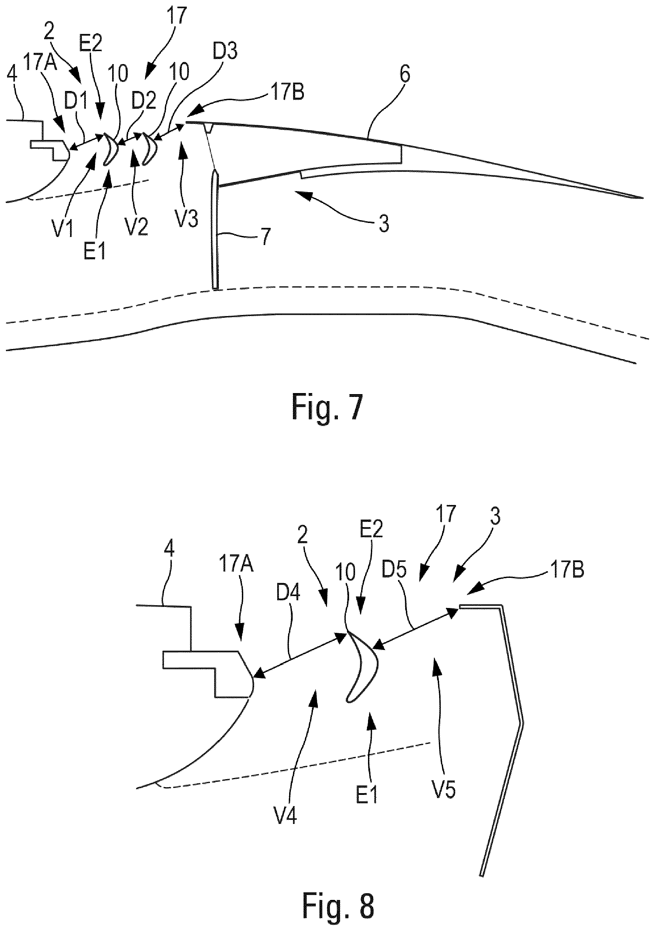

Dans un premier mode de réalisation, représenté sur la figure 7, la structure d'éjection 2 comprend deux déflecteurs orbitaux 10.

Ces deux déflecteurs orbitaux 10 sont agencés l'un derrière l'autre, d'amont en aval, de manière à créer des voies d'éjection V1, V2 et V3. Ces voies d'éjection V1, V2 et V3 présentent des distances D1, D2 et D3 longitudinales à l'extrémité de sortie E2 de la structure d'éjection 2, à savoir :
- la distance D1 entre l'extrémité amont 17A de la zone d'éjection 17 et le déflecteur orbital 10 le plus en amont ;
- la distance D2 entre les deux déflecteurs orbitaux 10 ; et
- la distance D3 entre le déflecteur orbital 10 le plus en aval et l'extrémité aval 17B de la zone d'éjection 17.

Les distances D1, D2 et D3 sont différentes dans ce premier mode de réalisation et choisies de manière à optimiser l'éjection du flux à travers les voies d'éjection V1, V2 et V3 et à obtenir les propriétés recherchées de l'inverseur de poussée 3 concernant notamment l'éjection.

Dans une variante de réalisation, il est également envisageable que certaines des distances D1, D2 et D3 ou toutes les distances D1, D2 et D3 soient égales.

Le réglage des distances D1 à D3 est un paramètre important pour modifier la performance de la structure d'éjection 2 et ainsi de l'inverseur de poussée 3. En particulier, comme l'écoulement G1 (figure 1) arrivant vers l'inverseur de poussée 3 n'est pas uniforme, on peut adapter notamment l'écartement des déflecteurs orbitaux 10 et donc les distances D1 à D3 pour optimiser l'écoulement H traversant la structure d'éjection 2.

Dans un deuxième mode de réalisation, représenté sur la figure 8, la structure d'éjection 2 comprend un seul déflecteur orbital 10.

Ce déflecteur orbital 10 est agencé dans la zone d'éjection 17 de manière à créer deux voies d'éjection V4 et V5. Ces deux voies d'éjection V4 et V5 présentent des distances D4 et D5 longitudinales à l'extrémité de sortie E2 de la structure d'éjection 2, à savoir :
- la distance D4 entre l'extrémité amont 17A de la zone d'éjection 17 et le déflecteur orbital 10 ; et
- la distance D5 entre le déflecteur orbital 10 et l'extrémité aval 17B de la zone d'éjection 17.

Les distances D4 et D5 sont différentes et choisies de manière à optimiser l'éjection du flux à travers les voies d'éjection V4 et V5 et à obtenir les propriétés recherchées de l'inverseur de poussée 3 concernant notamment l'éjection. De préférence, la distance D5 est plus courte que la distance D4. Dans une variante de réalisation, il est également envisageable que les distances D4 et D5 soient égales ou que la distance D5 soit plus longue que la distance D4. Les distances D4 et D5 sont adaptées en fonction de l'écoulement dans les voies d'éjection V4 et V5.

Grâce aux caractéristiques du déflecteur 1A, 1B utilisé, un seul déflecteur orbital 10, optimisé notamment en profil et en section de sortie, peut être suffisant pour le fonctionnement de l'inverseur de poussée, en particulier dans le cas d'un moteur 5 à haut taux de dilution de type UHBR (pour « Ultra High Bypass Ratio » en anglais) qui présente notamment des vitesses de rotation de soufflante réduites.

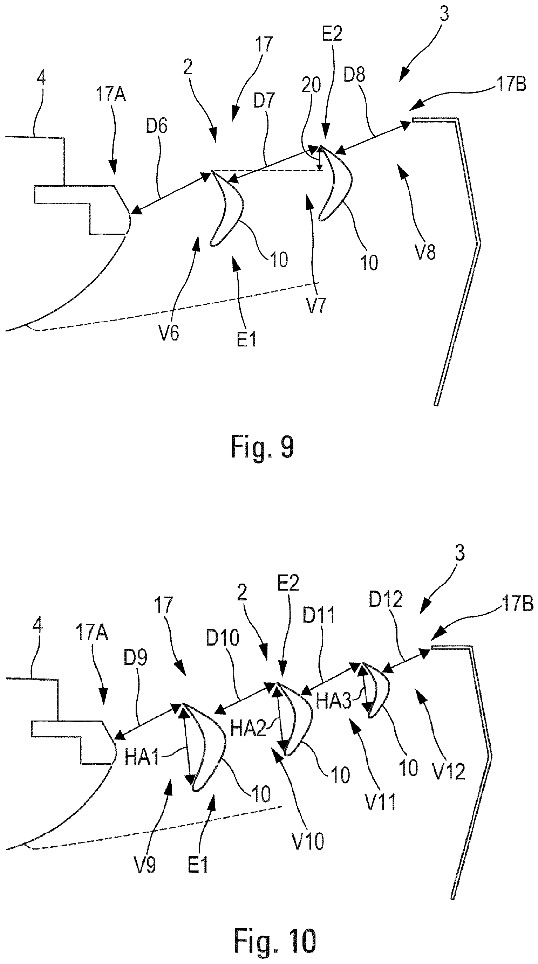

Dans un troisième mode de réalisation, représenté sur la figure 9, la structure d'éjection 2 comprend deux déflecteurs orbitaux 10.

Ces déflecteurs orbitaux 10 sont agencés l'un derrière l'autre, d'amont en aval, de manière à créer des voies d'éjection V6, V7 et V8. Ces voies d'éjection V6, V7 et V8 présentent des distances D6, D7 et D8 longitudinales à l'extrémité de sortie E2 de la structure d'éjection 2, à savoir :
- la distance D6 entre l'extrémité amont 17A de la zone d'éjection 17 et le déflecteur orbital 10 le plus en amont ;
- la distance D7 entre les deux déflecteurs orbitaux 10 ; et
- la distance D8 entre le déflecteur orbital 10 le plus en aval et l'extrémité aval 17B de la zone d'éjection 17.

Les distances D6, D7 et D8 sont différentes dans ce mode de réalisation et choisies de manière à optimiser l'éjection du flux à travers les voies d'éjection V6, V7 et V8 et à obtenir les propriétés recherchées de l'inverseur de poussée 3 concernant notamment l'éjection. Dans une variante de réalisation, il est également envisageable que certaines des distances D6, D7 et D8 ou toutes les distances D6, D7 et D8 soient égales.

De plus, dans ce troisième mode de réalisation, à la différence des premier et deuxième modes de réalisation décrits ci-dessus, les déflecteurs orbitaux 10 ne sont pas alignés. En effet, les deux déflecteurs orbitaux 10 de réalisation identique sont décalés radialement l'un par rapport à l'autre. Plus précisément, le déflecteur orbital 10 le plus en aval est décalé radialement vers l'extérieur d'une distance radiale 20, par rapport au déflecteur orbital 10 le plus en amont. Ce décalage radial permet, notamment, de participer à l'obtention de caractéristiques d'écoulement particulières recherchées pour la structure d'éjection 2.

Par ailleurs, dans un quatrième mode de réalisation, représenté sur la figure 10, la structure d'éjection 2 comprend trois déflecteurs orbitaux 10.

Ces déflecteurs orbitaux 10 sont agencés l'un derrière l'autre, d'amont en aval, de manière à créer des voies d'éjection V9, V10, V11 et V12. Ces voies d'éjection V9, V10, V11 et V12 présentent des distances D9, D10, D11 et D12 longitudinales à l'extrémité de sortie E2 de la structure d'éjection 2, à savoir :
- la distance D9 entre l'extrémité amont 17A de la zone d'éjection 17 et le déflecteur orbital 10 le plus en amont ;
- la distance D10 entre les deux déflecteurs orbitaux 10 les plus en amont ;
- la distance D11 entre les deux déflecteurs orbitaux 10 les plus en aval ; et
- la distance D12 entre le déflecteur orbital 10 le plus en aval et l'extrémité aval 17B de la zone d'éjection 17.

Les distances D9, D10, D11 et D12 sont différentes dans ce mode de réalisation et choisies de manière à optimiser l'éjection du flux à travers les voies d'éjection V10, V11 et V12 et à obtenir les propriétés recherchées de l'inverseur de poussée 3 concernant notamment l'éjection. Dans une variante de réalisation, il est également envisageable que certaines des distances D9, D10, D11 et D12 ou toutes les distances D9, D10, D11 et D12 soient égales.

Dans ce quatrième mode de réalisation, les déflecteurs orbitaux 10 ne sont pas alignés. En effet, les déflecteurs orbitaux 10 sont décalés radialement les uns par rapport aux autres. Plus précisément, d'amont en aval, les déflecteurs orbitaux 10 successifs sont décalés radialement vers l'extérieur. Ce décalage radial permet, notamment, de participer à l'obtention de caractéristiques d'écoulement particulières recherchées pour la structure d'éjection 2.

De plus, dans ce quatrième mode de réalisation, à la différence des premier, deuxième et troisième modes de réalisation décrits ci-dessus, les déflecteurs orbitaux 10 ne sont pas identiques. En effet, les trois déflecteurs orbitaux 10 présentent des hauteurs HA1, HA2, et HA3 respectives qui sont différentes. Dans une variante de réalisation, les déflecteurs orbitaux 10 peuvent également présenter d'autres différences entre eux, et ceci en plus ou à la place de la différence de hauteurs. Ces différences peuvent, par exemple, concerner la géométrie des faces amont et/ou aval des plaques déflectrices des déflecteurs orbitaux. Les différences entre les déflecteurs orbitaux 10 permettent notamment de participer à l'obtention de caractéristiques d'écoulement particulières recherchées pour la structure d'éjection 2.

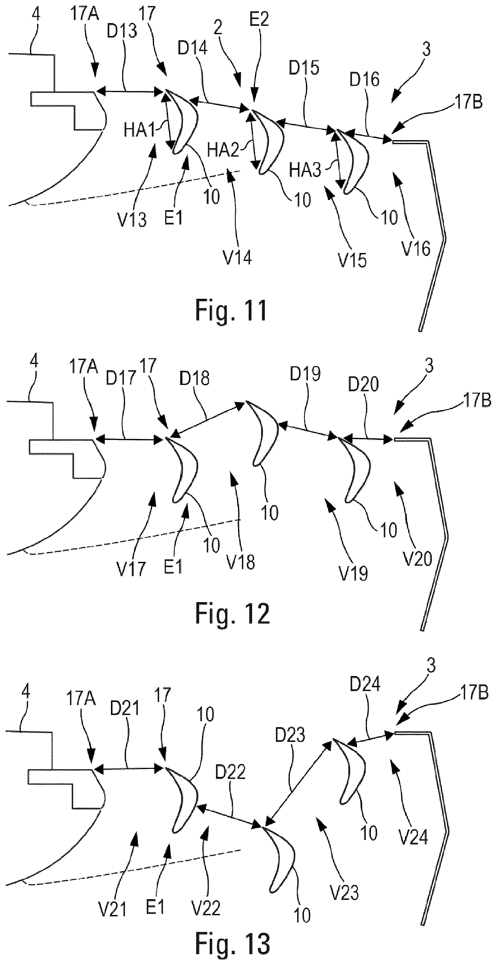

Par ailleurs, dans un cinquième mode de réalisation, représenté sur la figure 11, la structure d'éjection 2 comprend trois déflecteurs orbitaux 10 identiques (de hauteur HA). En variante, ils peuvent également, au moins pour une partie d'entre eux, être différents.

Ces déflecteurs orbitaux 10 sont agencés l'un derrière l'autre, d'amont en aval, de manière à créer des voies d'éjection V13, V14, V15 et V16. Ces voies d'éjection V13, V14, V15 et V16 présentent des distances D13, D14, D15 et D16 longitudinales à l'extrémité de sortie E2 de la structure d'éjection 2, à savoir :
- la distance D13 entre l'extrémité amont 17A de la zone d'éjection 17 et le déflecteur orbital 10 le plus en amont ;
- la distance D14 entre les deux déflecteurs orbitaux 10 les plus en amont ;
- la distance D15 entre les deux déflecteurs orbitaux 10 les plus en aval ; et
- la distance D16 entre le déflecteur orbital 10 le plus en aval et l'extrémité aval 17B de la zone d'éjection 17.

Les distances D13, D14, D15 et D16 sont différentes dans ce mode de réalisation et choisies de manière à optimiser l'éjection du flux à travers les voies d'éjection V13, V14, V15 et V16 et à obtenir les propriétés recherchées de l'inverseur de poussée 3 concernant notamment l'éjection. Dans une variante de réalisation, il est également envisageable que certaines des distances D13, D14, D15 et D16 ou toutes les distances D13, D14, D15 et D16 soient égales.

Dans ce cinquième mode de réalisation, les déflecteurs orbitaux 10 ne sont pas alignés. En effet, les déflecteurs orbitaux 10 sont décalés radialement les uns par rapport aux autres. Plus précisément, d'amont en aval, les déflecteurs orbitaux 10 successifs sont décalés radialement vers l'intérieur, donc en sens opposé au mode de réalisation de la figure 10. Ce décalage radial permet, notamment, de participer à l'obtention de caractéristiques d'écoulement particulières recherchées pour la structure d'éjection 2.

Les sixième et septième modes de réalisation des figures 12 et 13 présentent d'autres exemples de décalages radiaux des déflecteurs orbitaux 10, les uns par rapport aux autres. Ces décalages radiaux permettent de participer à l'obtention de caractéristiques d'écoulement particulières recherchées pour la structure d'éjection 2.

Dans ces sixième et septième modes de réalisation, les déflecteurs orbitaux 10 sont identiques. En variante, ils peuvent également, au moins pour une partie d'entre eux, être différents.

Dans le sixième mode de réalisation de la figure 12, les déflecteurs orbitaux 10 sont agencés l'un derrière l'autre, d'amont en aval, de manière à créer des voies d'éjection V17, V18, V19 et V20. Ces voies d'éjection V17, V18, V19 et V20 présentent des distances D17, D18, D19 et D20 longitudinales à l'extrémité de sortie E2 de la structure d'éjection 2, à savoir :
- la distance D17 entre l'extrémité amont 17A de la zone d'éjection 17 et le déflecteur orbital 10 le plus en amont ;
- la distance D18 entre les deux déflecteurs orbitaux 10 les plus en amont ;
- la distance D19 entre les deux déflecteurs orbitaux 10 les plus en aval ; et
- la distance D20 entre le déflecteur orbital 10 le plus en aval et l'extrémité aval 17B de la zone d'éjection 17.

Les distances D17, D18, D19 et D20 sont différentes dans ce mode de réalisation et choisies de manière à optimiser l'éjection du flux à travers les voies d'éjection V17, V18, V18 et V20 et à obtenir les propriétés recherchées de l'inverseur de poussée 3 concernant notamment l'éjection. Dans une variante de réalisation, il est également envisageable que certaines des distances D17, D18, D19 et D20 ou toutes les distances D17, D18, D19 et D20 soient égales.

Dans ce sixième mode de réalisation, les déflecteurs orbitaux 10 ne sont pas tous alignés. En effet, certains des déflecteurs orbitaux 10 sont décalés radialement les uns par rapport aux autres. Plus précisément, les deux déflecteurs orbitaux 10 d'extrémité (à savoir le déflecteur orbital 10 le plus en amont et le déflecteur orbital 10 le plus en aval) sont agencés radialement au même niveau, alors que le déflecteur orbital 10 central est décalé radialement vers l'extérieur par rapport à ces deux déflecteurs orbitaux 10 d'extrémité.

Par ailleurs, dans le septième mode de réalisation de la figure 13, les déflecteurs orbitaux 10 sont agencés l'un derrière l'autre, d'amont en aval, de manière à créer des voies d'éjection V21, V22, V23 et V24. Ces voies d'éjection V21, V22, V23 et V24 présentent des distances D21, D22, D23 et D24 longitudinales à l'extrémité de sortie E2 de la structure d'éjection 2, à savoir :
- la distance D21 entre l'extrémité amont 17A de la zone d'éjection 17 et le déflecteur orbital 10 le plus en amont ;
- la distance D22 entre les deux déflecteurs orbitaux 10 les plus en amont ;
- la distance D23 entre les deux déflecteurs orbitaux 10 les plus en aval ; et
- la distance D24 entre le déflecteur orbital 10 le plus en aval et l'extrémité aval 17B de la zone d'éjection 17.

Les distances D21, D22, D23 et D24 sont différentes dans ce mode de réalisation et choisies de manière à optimiser l'éjection du flux à travers les voies d'éjection V21, V22, V23 et V24 et à obtenir les propriétés recherchées de l'inverseur de poussée 3 concernant notamment l'éjection. Dans une variante de réalisation, il est également envisageable que certaines des distances D21, D22, D23 et D24 ou toutes les distances D21, D22, D23 et D24 soient égales.

Dans ce septième mode de réalisation, les déflecteurs orbitaux 10 ne sont pas alignés. En effet, certains des déflecteurs orbitaux 10 sont décalés radialement les uns par rapport aux autres. Plus précisément, le déflecteur orbital 10 central est décalé radialement le plus vers l'intérieur par rapport aux deux autres déflecteurs orbitaux 10, et le déflecteur orbital 10 le plus en aval est décalé radialement le plus vers l'extérieur par rapport aux deux autres déflecteurs orbitaux 10.

Le réglage des distances D1 à D24 est donc un paramètre important pour optimiser la performance de la structure d'éjection 2 et ainsi de l'inverseur de poussée 3. En particulier, comme l'écoulement G1 (figure 1) arrivant vers l'inverseur de poussée 3 n'est pas uniforme, on peut adapter notamment l'écartement des déflecteurs orbitaux 10 pour optimiser l'écoulement H (traversant la structure d'éjection 2) qui est générateur de contre-poussée.

Dans le cadre de la présente invention, le pilotage de l'écoulement H à travers la structure d'éjection 2 permettant d'optimiser la structure d'éjection 2, est réalisé notamment par l'adaptation des voies d'éjection V1 à V24, et ceci sur toute leur longueur de l'extrémité d'entrée E1 à l'extrémité de sortie E2, notamment en adaptant le positionnement (longitudinal et radial) et les caractéristiques des déflecteurs orbitaux 10 et éventuellement des déflecteurs latéraux 11.

Sur les exemples des figures 7 à 13, les déflecteurs orbitaux 10 représentés schématiquement présentent la forme du déflecteur 1A de la figure 3. Les déflecteurs orbitaux 10 peuvent également correspondre au déflecteur 1B de la figure 5.

Ainsi, grâce à l'utilisation de déflecteurs orbitaux 10 correspondant aux déflecteurs 1A, 1B selon l'un des modes de réalisation de l'invention, on est en mesure de remplacer les grilles d'éjection usuelles à cascades comprenant un nombre élevé de déflecteurs orbitaux usuels par la structure d'éjection 2 comprenant un nombre réduit de déflecteurs orbitaux 10, par exemple 1 à 6 déflecteurs orbitaux 10. Les déflecteurs orbitaux 10 ont pour but de remplir la même fonction aérodynamique que les cascades des grilles d'éjection usuelles pour fournir l'effort de contre-poussée nécessaire.

Le nombre et les formes de ces déflecteurs orbitaux 10 permettent de répondre à des performances en débit (débit suffisant pour éviter les problèmes de fonctionnement de la soufflante) et en efficacité (effort de contre-poussée). Les déflecteurs orbitaux 10 peuvent donc être réalisés pour obtenir les performances recherchées, adaptées notamment au besoin.

En particulier, comme l'écoulement G1 (figure 1) arrivant vers l'inverseur de poussée 3 n'est pas uniforme, on adapte le nombre, l'écartement et les caractéristiques du ou des déflecteurs orbitaux 10 pour les adapter à cet écoulement G afin d'optimiser l'écoulement H traversant la structure d'éjection 2 et ainsi d'augmenter la contre-poussée générée.

Les modes de réalisation précédents, relatifs aux figures 7 à 13, concernent les déflecteurs orbitaux 10 de la structure d'éjection 2.

Comme indiqué ci-dessus, dans un mode de réalisation particulier, la structure d'éjection 2 peut également comprendre des déflecteurs 1A, 1B comme déflecteurs latéraux 11.

Les déflecteurs latéraux 11, de préférence de nombre inférieur à 50, peuvent être réalisés de la même manière que les déflecteurs orbitaux 10. Les déflecteurs latéraux 11 ont pour fonction de répartir le flux d'air suivant plusieurs angles autour de l'inverseur de poussée 3. Ces déviations ont, notamment, pour but de contourner le rejet vers le sol, d'éviter une ré-ingestion de flux par l'entrée d'air ce qui pourrait dégrader le moteur, et d'éviter des interactions avec l'anémométrie.

Quel que soit le mode de réalisation envisagé, le nombre de déflecteurs latéraux 11 dépend notamment de l'objectif de performance recherché.

Dans un mode de réalisation comprenant plusieurs déflecteurs orbitaux 10, comme dans les modes de réalisation des figures 7 et 9 à 13, les déflecteurs latéraux 11 sont agencés entre les déflecteurs orbitaux 10, comme dans l'exemple de la figure 2.

En outre, dans un mode de réalisation à un seul déflecteur orbital 10, comme dans le mode de réalisation de la figure 8, les déflecteurs latéraux 11 sont attachés en interne au déflecteur orbital 10.

Il n'est donc pas nécessaire de prévoir un cadre de support entourant la structure d'éjection 2 pour retenir les déflecteurs comme pour une grille d'éjection usuelle.

Par conséquent, dans le cadre de la présente invention, on dispose d'une grande flexibilité pour réaliser la structure d'éjection 2. En effet, il est, notamment, possible de faire varier l'un, plusieurs ou l'ensemble des paramètres suivants des déflecteurs orbitaux 10 et/ou des déflecteurs latéraux 11 pour obtenir les propriétés souhaitées de la structure d'éjection 2 :
- leur nombre ;
- leurs caractéristiques individuelles, et en particulier :
   - leur hauteur ;
   - la valeur de leurs angles d'entrée et/ou de sortie ;
   - la forme de la courbure de leur zone intermédiaire ;
   - la largeur de la surface d'extrémité 22 dans le cas du déflecteur 1B ;
- leur emplacement dans la structure d'éjection, c'est-à-dire aussi bien leur position longitudinale (selon l'axe X) que leur position radiale (selon l'axe Z) dans la structure d'éjection, notamment pour définir les caractéristiques des voies d'éjection ; et
- une variation de leurs caractéristiques individuelles précitées en fonction de leur emplacement dans la structure d'éjection.

Les paramètres variables précédents ont un impact important sur les performances de l'inverseur de poussée 3 et ils peuvent donc être choisis pour réaliser une structure d'éjection 2 et un inverseur de poussée 3 adaptés au moteur et à la nacelle dans lesquels ils sont intégrés de manière à obtenir les propriétés et les performances recherchées.

En particulier, le pilotage de l'écoulement H à travers la structure d'éjection 2 peut être réalisé par l'adaptation des voies d'éjection V1 à V24, qui est obtenue en adaptant le positionnement (longitudinal et radial) et les caractéristiques individuelles des déflecteurs orbitaux 10 et éventuellement des déflecteurs latéraux 11.

Les déflecteurs 1A, 1B et/ou les structures d'éjection 2 et/ou les inverseurs de poussée 3, tels que décrits ci-dessus, présentent ainsi de nombreux avantages.

Tout d'abord, le profil géométrique global particulier du déflecteur 1A, 1B permet de générer un effet aérodynamique spécifique et ainsi de modifier la topologie d'écoulement au niveau des sections de sortie de l'inverseur de poussée 3. En particulier, on peut générer un effet angulaire qui permet d'augmenter l'effet de contre-poussée. Surtout, on est en mesure de former des voies d'éjection V1 à V24 qui permettent d'agir efficacement sur le flux pour obtenir les caractéristiques recherchées de l'éjection, notamment en termes de performance.

On est ainsi en mesure de remplacer les grilles d'éjection usuelles à cascades (comprenant un nombre élevé de déflecteurs orbitaux usuels) par la structure d'éjection 2 comprenant un nombre réduit de déflecteurs orbitaux 10, par exemple 1 à 6 déflecteurs orbitaux 10. Les déflecteurs orbitaux 10 ont pour but de remplir la même fonction aérodynamique que les cascades des grilles d'éjection usuelles, à savoir fournir l'effort de contre-poussée souhaité.

On obtient également une réduction de l'encombrement et de la masse pour la structure d'éjection 2 par rapport à une grille d'éjection usuelle à cascades. De plus, à la différence d'une grille d'éjection usuelle, il n'est pas nécessaire de prévoir un cadre de support entourant la structure d'éjection 2 pour retenir les déflecteurs, ce qui contribue également à la réduction de l'encombrement et de la masse.

Le nombre et les formes des déflecteurs orbitaux 10 permettent de répondre à des performances en débit (débit suffisant pour éviter les problèmes de fonctionnement de la soufflante du moteur) et en efficacité (effort de contre-poussée). Les déflecteurs orbitaux 10 peuvent être réalisés pour obtenir les performances recherchées, adaptées notamment au besoin.

L'augmentation de l'efficacité obtenue permet de diminuer fortement la course de l'inverseur de poussée 3 et notamment du capot mobile 6, une diminution de 40% d'ouverture étant envisageable pour certains modes de réalisation, ce qui présente un avantage important, en particulier pour l'aspect cinématique, la longueur des actionneurs, la chaîne de cote, la masse, ...

Par ailleurs, les déflecteurs et plus généralement la structure d'éjection peuvent être réalisés en différents matériaux, par exemple en métal, en matériau composite ou en bimatériau. De plus, les différents modes de réalisation possibles permettent de mettre en oeuvre différentes méthodes de fabrication, par exemple une méthode de fabrication usuelle de pièce composite ou une impression métallique 3D, et on peut utiliser, à chaque fois, la méthode la plus adaptée, par exemple en termes de simplicité, de rapidité et/ou de coût de fabrication.

Par ailleurs, grâce aux caractéristiques variées susceptibles d'être obtenues pour les déflecteurs 1A, 1B, il est également possible d'adapter aussi bien les déflecteurs orbitaux 10 que les déflecteurs latéraux 11 afin de générer un écoulement maîtrisé sur tout le périmètre moteur, cet écoulement étant par exemple adapté à une cartographie d'écoulement souhaitée dépendant notamment de caractéristiques du moteur et de contraintes aérodynamiques de l'aéronef.

Par ailleurs, les paramètres suivants permettent d'optimiser le fonctionnement des déflecteurs orbitaux :
- l'espacement entre les déflecteurs orbitaux ;
- la taille des déflecteurs orbitaux ;
- l'étagement (ou agencement radial) des déflecteurs orbitaux ;
- la géométrie des déflecteurs orbitaux, qui peut être différente entre les déflecteurs orbitaux d'un même inverseur de poussée.

Toute combinaison de ces paramètres peut être mise en place dans un moteur, en fonction des caractéristiques du moteur sur lequel ces déflecteurs orbitaux sont montés.

## Revendications

1. Déflecteur pour un inverseur de poussée d'une nacelle d'un moteur d'aéronef, ledit déflecteur (1A, 1B) comprenant une plaque déflectrice (8A, 8B) destinée à agir sur un écoulement aérodynamique, ladite plaque déflectrice (8A, 8B) présentant une face concave dite face amont (F1A, F1B) et une face convexe dite face aval (F2A, F2B) ainsi qu'une extrémité dite d'entrée (E1A, E1B) et une extrémité dite de sortie (E2A, E2B),
**caractérisé en ce que** la face amont (F1A, F1B) et la face aval (F2A, F2B) de la plaque déflectrice (8A, 8B) présentent des profils courbes différents avec, entre l'extrémité d'entrée (E1A, E1B) et l'extrémité de sortie (E2A, E2B), trois zones successives :
- une zone d'entrée (ZA1, ZB2) correspondant à un tronçon rectiligne, en section transversale, à la fois sur la face amont (F1A, F1B) et sur la face aval (F2A, F2B) ;
- une zone intermédiaire (ZA2, ZB2) correspondant, en section transversale, à un tronçon courbe à la fois sur la face amont (F1A, F1B) et sur la face aval (F2A, F2B),
les tronçons courbes présentant des courbures différentes entre la face amont (F1A, F1B) et la face aval (F2A, F2B) ; et
- une zone de sortie (ZA3, ZB3) correspondant à un tronçon rectiligne, en section transversale, à la fois sur la face amont (F1A, F1B) et sur la face aval (F2A, F2B).

2. Déflecteur selon la revendication 1,
**caractérisé en ce que** la plaque déflectrice (8A, 8B) est pourvue, dans son corps, d'un espace interne (16, 18) fermé creux.

3. Déflecteur selon l'une des revendications 1 et 2,
**caractérisé en ce que** la plaque déflectrice (8A 8B) comprend au moins l'une des valeurs d'angle suivantes :
- pour la face amont (F1A, F1B), à l'extrémité d'entrée (E1A, E1B), un angle d'entrée (αA1, αB1) compris entre 5° et 70° ;
- pour la face aval (F2A, F2B), à l'extrémité d'entrée (E1A, E1B), un angle d'entrée (αA2, αB2) compris entre 5° et 70° ;
- pour la face amont (F1A, F1B), à l'extrémité de sortie (E2A, E2B), un angle de sortie (βA1, βB1) compris entre 10° et 60° ;
- pour la face aval (F2A, F2B), à l'extrémité de sortie (E2A, E2B), un angle de sortie (βA2, βB2) compris entre 10° et 60°.

4. Déflecteur selon l'une quelconque des revendications 1 à 3, **caractérisé en ce qu'**à l'extrémité de sortie (E2A), la face amont (F1A) et la face aval (F2A) de la plaque déflectrice (8A) se rejoignent le long d'une ligne de jonction (P1).

5. Déflecteur selon l'une quelconque des revendications 1 à 3, **caractérisé en ce qu'**à l'extrémité de sortie (E2A), la face amont (F1A) et la face aval (F2A) de la plaque déflectrice (8A) rejoignent de part et d'autre une surface d'extrémité (22).

6. Déflecteur selon la revendication 5,
**caractérisé en ce que** la surface d'extrémité (22) est plane.

7. Déflecteur selon l'une quelconque des revendications précédentes, **caractérisé en ce qu'**il correspond à l'un des déflecteurs suivants :
- un déflecteur orbital (10) ;
- un déflecteur latéral (11).

8. Inverseur de poussée pour une nacelle d'un moteur d'aéronef, **caractérisé en ce qu'**il comporte au moins un déflecteur (1A, 1B) selon l'une quelconque des revendications 1 à 7.

9. Inverseur de poussée selon la revendication 8,
**caractérisé en ce que** le ou les déflecteurs (10) sont agencés pour créer des voies d'éjection (V1 à V24) présentant des largeurs (D1 à D24) variables.

10. Inverseur de poussée selon l'une des revendications 8 et 9, **caractérisé en ce qu'**il comporte une pluralité de déflecteurs (10) présentant des caractéristiques (HA1, HA2, HA3) variables en fonction de leur emplacement.

11. Inverseur de poussée selon l'une quelconque des revendications 8 à 10,
**caractérisé en ce qu'**il comporte une pluralité de déflecteurs (10), dont au moins deux sont décalés radialement l'un par rapport à l'autre.

12. Nacelle pour un moteur d'aéronef,
**caractérisée en ce qu'**elle comporte au moins un inverseur de poussée (3) selon l'une quelconque des revendications 8 à 11
